(19) **Europäisches Patentamt**

**European Patent Office**

**Office européen des brevets**

(11) Veröffentlichungsnummer : **0 414 672 B1**

(12) # EUROPÄISCHE PATENTSCHRIFT

(45) Veröffentlichungstag der Patentschrift :
**12.08.92 Patentblatt 92/33**

(51) Int. Cl.⁵ : **F16C 29/12, B23Q 1/08, B23Q 1/26**

(21) Anmeldenummer : **87907580.2**

(22) Anmeldetag : **21.11.87**

(86) Internationale Anmeldenummer :
**PCT/DE87/00542**

(87) Internationale Veröffentlichungsnummer :
**WO 88/06246 25.08.88 Gazette 88/19**

(54) **LINEAREINHEIT FÜR HANDHABUNGSGERÄTE U. DERGL. DER INDUSTRIELLEN FERTIGUNG.**

(30) Priorität : **16.02.87 DE 3704800**

(43) Veröffentlichungstag der Anmeldung :
**06.03.91 Patentblatt 91/10**

(45) Bekanntmachung des Hinweises auf die
Patenterteilung :
**12.08.92 Patentblatt 92/33**

(84) Benannte Vertragsstaaten :
**CH DE FR GB IT LI SE**

(56) Entgegenhaltungen :
**EP-A- 0 180 323**

(56) Entgegenhaltungen :
**DE-A- 3 313 215**
**FR-A- 1 259 363**
**GB-A- 2 169 825**
**US-A- 3 338 642**
**US-A- 3 564 970**

(73) Patentinhaber : **ROBERT BOSCH GMBH**
**Postfach 30 02 20**
**W-7000 Stuttgart 30 (DE)**

(72) Erfinder : **GOSDOWSKI, Gerhard**
**Camberleystr. 83**
**W-7120 Bietigheim-Bissingen (DE)**
Erfinder : **RAPPOLD, Roland**
**Auf der Weid 36**
**W-7067 Plüderhausen (DE)**

EP 0 414 672 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Stand der Technik

Die Erfindung geht aus von einer Lineareinheit nach der Gattung des Hauptanspruchs. Bei derartigen Lineareinheiten, siehe z.B. DE-A- 3 313 215 oder GB-A- 2 169 825, muß die Pinole mit Rücksicht auf die geforderte hohe Positionier- und Wiederholgenauigkeit der Arbeitsgänge absolut spielfrei gelagert sein. Bei bekannten Lineareinheiten der gattungsmäßigen Art sind an beiden Stirnenden eines rohrförmigen Gehäuseteils Rollenlager mit verhältnismäßig großen Lagerrollen angebracht, von denen mehrere zur Lagerspielbeseitigung bzw. Justierung der Pinole in radialer Richtung verstellbar sind. Diese Ausführung bedingt einen hohen Montageaufwand und benötigt relativ viel Platz.

Vorteile der Erfindung

Die erfindungsgemäße Anordnung mit den kennzeichnenden Merkmalen des Hauptanspruches ist montagefreundlich, kostengünstig und auch platzsparend, zumal die Lagerelemente für die Pinole so ausgebildet werden können, daß sie nicht aus dem Gehäuseteil heraustreten. Durch die einzeln verstellbaren Lagerelemente lassen sich Geometrie- und Fluchtfehler von Gehäuseteil und Pinole leicht ausgleichen.

Durch die in den Unteransprüchen angeführten Maßnahmen sind vorteilhafte Weiterbildungen der Anordnung nach dem Hauptanspruch möglich.

Eine besonders gedrängte Ausführung ergibt sich, wenn jedes Lagerelement eine ebene Lagerfläche bzw. eine Mehrzahl von Lagerstellen hat, die in einer gemeinsamen Lagerebene liegen, welche mit der gedachten Achse der zylindrischen Stützfläche des Lagerelementes den gleichen spitzen Zustell- bzw. Keilwinkel einschließt, wie die Achse der Gehäusebohrung mit der Längsachse der Pinole, wobei sich vorteilhaft die Lagerebene des Lagerelementes annähernd über die gesamte Länge der zylindrischen Stützfläche erstreckt. Diese Ausführung hat auch den weiteren Vorteil, daß die Pinole über einen längeren axialen Bereich hinweg geführt werden kann, so daß man bei entsprechend langer Ausbildung der Lagerelemente gegebenenfalls auch mit einem einzigen axialen Lagerbereich auskommt.

Die Verwendung handelsüblicher Lagerkörper ist möglich, wenn jedes Lagerelement aus einem mit der zylindrischen Stützfläche versehenen Führungsegment und einem getrennt davon ausgeführten Lagerkörper besteht, der passend in eine Aufnahme des Führungssegmentes eingesetzt und vorzugsweise lösbar mit diesem verbunden ist.

Die Wand der die beiden Lagerelemente aufnehmenden Gehäusebohrung wird zur Abstützung der beiden Führungssegemente der Lagerelemente optimal genutzt, wenn die beiden Lagerelemente an den einander zugekehrten Längsseiten ihrer Führungssegmente durch je eine Schulterfläche begrenzt sind, die mindestens annähernd einen Winkel von 45° mit der Lagerebene einschließt.

In weiterer Ausgestaltung der Erfindung wird vorgeschlagen, daß in den Stützflächen der Lagerelement und korrespondierend dazu in der Wand der Gehäusebohrung örtliche Ausnehmungen vorgesehen sind, durch welche zur äußeren Stirnseite des Lagerelementes hin offene Hohlräume gebildet sind, die ein nach dem Einjustieren der Lagerelemente eingebrachtes Füllmaterial zum formschlüssigen und spielfreien Festlegen der Lagerelemente zwischen dem Gehäuseteil und der Pinole enthalten. Als Füllmaterial kann vorteilhaft ein aushärtbarer Kunststoff dienen. Dadurch ist erreicht, daß Befestigungselemente in Form von Stiften, Schrauben oder ähnlichem entfallen und die Lagerelemente absolut spielfrei und schüttelfest in der eingestellten Lage festgehalten werden.

Die das Füllmaterial aufnehmenden örtlichen Ausnehmungen in der Wand der Gehäusebohrung und in den Lagerelementen können vorteilhaft ohne radiale Hinterschneidungen ausgeführt sein, so daß die Lagerelemente nach Entfernen der Pinole in radialer Richtung aus den Gehäusebohrungen herausgenommen werden können. wenn das Lagerelement aus einem Lagerkörper und einem Führungssegment besteht, kann der Lagerkörper im Bedarfsfall ausgewechselt und der neue Lagerkörper zusammen mit dem vorhandenen Führungssegment wieder eingesetzt werden, wonach ohne weitere Justiervorgänge die Spielfreiheit der Pinolenlagerung wieder gewährleistet ist. Ferner können auch Maßnahmen getroffen werden, daß das in die Hohlräume eingebrachte, zu formstabilen Körpern erstarrte Füllmaterial nach dem Herausnehmen der Lagerelemente aus der Gehäusebohrung ebenfalls entfernt werden kann, so daß ein ausgewechseltes Lagerelement bzw. ein ausgewechselter Lagerkörper neu einjustiert und danach durch Einbringen von Füllmaterial neu festgelegt werden kann.

Bei einer bevorzugten Ausführungsform wird vorgeschlagen, daß die Pinole an zwei sich diametral gegenüberliegenden Längskanten durch paarweise in zylindrischen Gehäusebohrungen steckende Lagerelemente geführt ist. Durch diesen Vorschlag lassen sich die Lagerelemente vereinheitlichen, die Lagetoleranzen der Führungsflächen an der Pinole entfeinern und außerdem kann eine Führung bzw. Lagerung der Pinole an den anderen Längskanten entfallen, so daß die Pinole in diesen Bereichen unbearbeitet bleiben kann.

Zeichnung

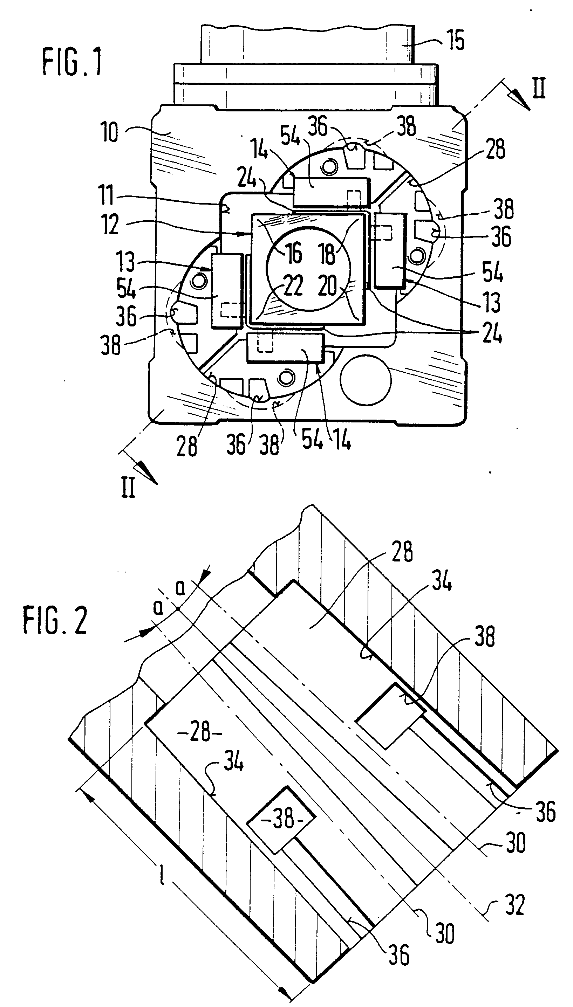

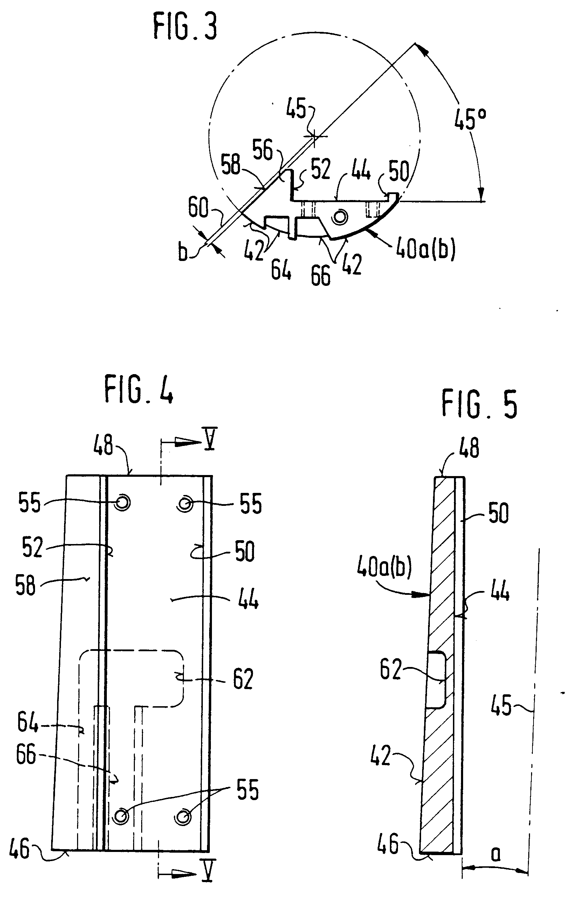

Ein Ausführungsbeispiel der Erfindung ist in der Zeichnung dargestellt und in der nachfolgenden Beschreibung näher erläutert. Es zeigen Figur 1 die Lineareinheit nach dem Ausführungsbeispiel in Stirnansicht, Figur 2 einen Schnitt nach der Linie II-II in Figur 1, Figur 3 in gegenüber Figur 1 leicht vergrößertem Maßstab die Stirnansicht eines Einzelteils der Lineareinheit nach Figur 1, Figur 4 eine Draufsicht auf das Einzelteil nach Figur 3 und Figur 5 einen Schnitt nach der Linie V-V in Figur 4.

Beschreibung des Ausführungsbeispiels

Die Lineareinheit hat ein quaderförmiges Gehäuseteil 10, das mit einer zentralen Durchgangsöffnung 11 versehen ist und in welchem eine langgestreckte Pinole 12 durch je zwei Lagerelemente 13 und 14 verschiebbar gelagert und geführt ist, die nachstehend noch näher beschrieben sind. Auf dem Gehäuseteil 10 sitzt ein elektrischer Antriebsmotor 15, der über ein nicht dargestelltes Getriebe auf die Pinole 12 einwirkt und dabei axiale Relativbewegungen zwischen Pinole 12 und Gehäuseteil 10 hervorruft. Anstelle des elektrischen Antriebsmotors 14 könnte die Lineareinheit auch mit einem pneumatischen Antrieb versehen sein.

Die Pinole 12 besteht aus einem rohrförmigen Ziehteil aus Aluminium, welches außen ein quadratisches Querschnittsprofil hat und demzufolge vier Längskanten 16, 18, 20, 22 aufweist. Neben den beiden sich diametral gegenüberliegenden Längskanten 18 und 22 ist die Pinole 12 mit je einem Belag 24 aus verschleißfestem Werkstoff, beispielsweise einer Stahllegierung, bestückt. Jeder Belag 24 bildet eine sich entlang der Längskante 18 bzw. 22 erstreckende Lagerfläche, auf welcher eines der Lagerelemente 13 bzw. 14 spielfrei aufliegt. An den beiden anderen Längskanten 16 und 20 ist die Pinole 12 nicht gelagert bzw. geführt, so daß die Pinole 12 in diesen Bereichen unbearbeitet bzw. unbestückt sein kann.

Zur paarweisen Aufnahme der Lagerelemente 13, 14 ist das Gehäuseteil 10 im stirnseitigen Endbereich mit zwei sich in Bezug auf die Durchgangsöffnung 11 diametral gegenüberliegenden zylindrischen Gehäusebohrungen 28 versehen, welche die Durchgangsöffnung 11 längs anschneiden. Die Bohrungsachsen 30 (Figur 2) der beiden Gehäusebohrungen 28 liegen in einer die beiden Längskanten 12, 28 der eingebauten Pinole 12 aufnehmenden Diagonalebene und schließen mit der Längsachse 32 der Pinole 12 bzw. der gesamten Lineareinheit einen spitzen Zustell- bzw. Keilwinkel a ein. Jede Gehäusebohrung 28 hat eine gewisse Länge 1, die so bemessen ist, daß die Lagerelemente 13, 14 in eine die Pinole 12 spielfrei lagernde und führende Stellung verschoben werden können. Jede Gehäusebohrung 28 ist ferner mit zwei in die Bohrungswand 34 eingearbeiteten Längsnuten 36 versehen, welche in taschenartige Vertiefungen 32 in der Bohrungswand 34 führen.

Die Lagerelemente 13, 14 haben je ein Führungssegment 40a bzw. 40b, die spiegelbildlich zueinander ausgebildet sind und deren Einzelmerkmale daher mit den gleichen Bezugszahlen bezeichnet sind. Jedes Führungssegment 40a,b hat eine zylindrische Stützfläche 42, die im eingebauten Zustand an der Bohrungswand 34 der Gehäusebohrung 28 anliegt. Ferner ist jedes Führungselement 40a,b mit einer ebenen Auflagefläche 44 versehen, die zur gedachten Achse 45 der zylindrischen Stützfläche 42 den gleichen Zustell- bzw. Keilwinkel a einschließt wie die Bohrungsachsen 30 zur Längsachse 32. Die Richtung des Zustell- bzw. Keilwinkels a am Führungssegment 40a,b ist so gewählt, daß dessen der Einstecköffnung der Gehäusebohrung 28 zugeordnete Stirnseite 46 in radialer Richtung gesehen breiter als die andere Stirnseite 48 ist.

Die Auflagefläche 44 des Führungssegments 40a,b ist an beiden Längsseiten durch je eine Schulterfläche 50, 52 begrenzt, die sich parallel zueinander über die ganze Länge des Führungssegmentes 40a,b erstrecken. Die Flächen 44, 50 und 52 umschließen eine Aufnahme für einen Lagerkörper 54, der beispielsweise ein Gleitschuh oder vorzugsweise ein flachbauender Rollenumlaufschuh einer handelsüblichen Bauart sein kann. Der Lagerkörper 54 erstreckt sich vorzugsweise über die gesamte Länge des Führungssegmentes 40a,b, dessen Länge unter Berücksichtigung der beim Einstellen bzw. Justieren der Lager zur Spielbeseitigung notwendigen axialen Verschiebungen auf die Länge 1 der Gehäusebohrung 28 abgestimmt ist. Die Lagerfläche des Lagerkörpers 54, die durch eine ebene, geschlossene Gleitfläche oder vorzugsweise durch eine Mehrzahl von in einer gemeinsamen Lagerebene liegenden Lagerstellen am zylindrischen Umfang von Lagerrollen gebildet sein kann, ist parallel zu der an der Auflagefläche 44 des Führungssegmentes 40a,b aufliegenden Körperfläche des Lagerkörpers 54 ausgerichtet. Der Lagerkörper 54 ist durch vier in Gewindelöcher 55 greifende Schrauben am Führungssegment 40a,b befestigt.

Die Schulterfläche 52 des Führungssegments 40a,b ist an einem leistenförmigen Vorsprung 56 gebildet, dessen andere Längsseite durch eine zweite Schulterfläche 58 begrenzt ist. Diese schließt mit der Auflagefläche 44 einen Winkel von 45° ein und tritt gegenüber einer durch die gedachte Achse 45 der zylindrischen Stützfläche 42 gehenden Ebene 60 um ein geringes Maß b zurück. In die Stützfläche 42 ist eine taschenartige Vertiefung 62 eingearbeitet, deren axiale Lage in etwa jenen der Vertiefungen 38 in den Gehäusebohrungen 28 entspricht. In die Vertiefung 62 führen zwei parallel nebeneinander angeordnete Längsnuten 64, 66 in der Stützfläche 42, die an der Stirnseite 46 des Führungssegmentes 40a,b ausmünden und von denen die eine, 66, mit einer Längsnut 36 in der Gehäusebohrung 28 korrespondiert.

Beim Zusammenbau der Teile werden nach dem Einsetzen der Pinole 12 in das Gehäuseteil 10 die als Baugruppen vorgefertigten Lagerelemente 12, 14 paarweise in die Gehäusebohrungen 28 eingesteckt und soweit gegen das Gehäuseinnere vorgeschoben, bis die Pinole 12 spielfrei zwischen den Lagerelementen 12, 14 gehalten ist. Danach werden die durch die Vertiefungen 28, 62 in den Teilen gebildeten Hohlräume mit einem erstarrenden Füllmaterial, vorzugsweise mit aushärtbarem Kunststoff ausgegossen, wobei das Einfüllen beispielsweise durch die Kanäle erfolgt, welche durch die Längsnuten 36 und 66 in den Gehäusebohrungen 28 und den Führungssegmenten 40a,b gebildet sind. Nach dem Verfestigen des Füllmaterials sind die Lagerelemente 13, 14 formschlüssig zwischen Pinole 12 und Gehäuseteil 10 festgelegt und die Pinole 12 spielfrei gelagert und geführt. Die Lagerelemente 13, 14 können ohne Beschädigung der Teile in radialer Richtung aus den Gehäusebohrungen 28 ausgebaut werden, wenn zuvor die Pinole 12 aus dem Lagerbereich herausgezogen wurde.

## Patentansprüche

1. Lineareinheit für Handhabungsgeräte und dergleichen der industriellen Fertigung, mit einem Gehäuseteil (10) und einer in einem Gehäuse durchgang (11) verschiebbar gelagerten Pinole (12), die mindestens eine Längskante (18, 22) hat und mit in geringem Abstand neben der Längskante (18, 22) sich erstreckenden Lagerflächen (24) versehen ist, an denen Lagerelemente (13, 14) anliegen, die zwischen Stützschultern am Gehäuseteil (10) und den Lagerflächen (24) der Pinole (12) spielfrei und unverlierbar festgelegt sind, dadurch gekennzeichnet, daß mindestens zwei im gleichen axialen Führungsbereich vorgesehene, den beiden Lagerflächen (24) einer Längskante (18, 22) der Pinole (12) zugeordnete Lagerelemente (13, 14) gemeinsam in einer den Gehäusedurchgang (11) für die Pinole (12) längs anschneidenden, zylindrischen Gehäusebohrung (28) angeordnet sind, deren Bohrungsachse (30) mindestens annähernd in einer die betreffende Längskante (18, 22) der Pinole (12) und deren Längsachse (32) aufnehmenden Ebene liegt und einen spitzen Zustellwinkel a mit der Längsachse (32) einschließt, und ferner, daß jedes der beiden Lagerelemente (13, 14) eine an der Wand der Gehäusebohrung (28) anliegende zylindrische Stützfläche (42) hat.

2. Lineareinheit nach Anspruch 1, dadurch gekennzeichnet, daß jedes Lagerelement (13, 14) eine ebene Lagerfläche bzw. eine Mehrzahl von Lagerstellen hat, die in einer gemeinsamen Lagerebene liegen, welche mit der gedachten Achse (45) der zylindrischen Stützfläche (42) des Lagerelementes (13, 14) den gleichen spitzen Zustellwinkel (a) einschließt, wie die Achse der Gehäusebohrung (28) mit der Längsachse der Pinole (12), und welche Lagerebene sich vorzugsweise in Achsrichtung der Pinole (12) annähernd über die gesamte Länge der zylindrischen Stützfläche (42) des Lagerelementes (13, 14) hinweg erstreckt.

3. Lineareinheit nach Anspruch 2, dadurch gekennzeichnet, daß jedes Lagerelement (13, 14) aus einem mit der zylindrischen Stützfläche (42) versehenen Führungssegment (40a,b) und einem Lagerkörper (54) besteht, der passend in eine Aufnahme (44, 50, 52) des Führungssegmentes (40a,b) eingesetzt und vorzugsweise lösbar mit diesem verbunden ist.

4. Lineareinheit nach Anspruch 3, dadurch gekennzeichnet, daß jeweils zwei Lagerelemente (13, 14) vorgesehen sind, daß die beiden gemeinsam in einer Gehäusebohrung (28) steckenden Lagerelemente (13, 14) an den einander zugekehrten Längsseiten ihrer Führungssegmente (40a,b) durch eine Schulterfläche (58) begrenzt sind, die mindestens annähernd einen Winkel von 45° mit der Lagerebene des Lagerkörpers (54) einschließt.

5. Lineareinheit nach einem der vorhergehenden Ansprüche, dadurch gekennzeichnet, daß in den Stützflächen (42) der Lagerelemente (13, 14) und korrespondierend dazu in der Wand (34) der die Lagerelemente (13, 14) aufnehmenden Gehäusebohrung (28) örtliche Ausnehmungen (36, 38, 62, 64, 66) vorgesehen sind, durch welche zur äußeren Stirnseite (46) des Lagerelementes (13, 14) hin offene Hohlräume gebildet sind, die ein nach dem Einjustieren der Lagerelemente (13, 14) eingebrachtes Füllmaterial zum formschlüssigen und spielfreien Festlegen der Lagerelemente (13, 14) zwischen dem Gehäuseteil (10) und der Pinole (12) enthalten.

6. Lineareinheit nach Anspruch 5, dadurch gekennzeichnet, daß als Füllmaterial ein aushärtbarer Kunststoff dient.

7. Lineareinheit nach Anspruch 5 oder 6, dadurch gekennzeichnet, daß die örtlichen Ausnehmungen (36, 38, 62, 64, 66) in der Wand (34) der Gehäusebohrung (28) und den Stützflächen (42) der Lagerelemente (13, 14) ohne radiale Hinterschneidungen ausgeführt sind.

8. Lineareinheit nach einem der vorhergehenden Ansprüche, mit einer Pinole, die ein rechteckiges bzw. quadratisches Querschnittsprofil hat, dadurch gekennzeichnet, daß die Pinole (12) an zwei sich diametral gegenüberliegenden Längskanten (18, 22) durch paarweise in zylindrischen Gehäusebohrungen (28) steckende Lagerelemente (13, 14) geführt ist.


## Claims

1. Linear unit for handling equipment and the like used in industrial production, having a housing part (10) and a centre sleeve (12), displaceably mounted in a housing opening (11), which centre sleeve has at least one longitudinal edge (18, 22) and is provided with bearing surfaces (24) extending at a close distance next to the longitudinal edge (18, 22), against which bearing surfaces bearing elements (13, 14) bear which are secured in a play-free and captive manner between supporting shoulders on the housing part (10) and the bearing surfaces (24) of the centre sleeve (12), characterised in that at least two bearing elements (13, 14), provided in the same axial guide area and assigned to the two bearing surfaces (24) of a longitudinal edge (18, 22) of the centre sleeve (12), are disposed jointly in a cylindrical housing bore (28) which longitudinally intersects the housing opening (11) for the centre sleeve (12) and the bore axis (30) of which lies at least approximately in a plane receiving the corresponding longitudinal edge (18, 22) of the centre sleeve (12) and its longitudinal axis (32) and forms an acute delivery angle a with the longitudinal axis (32), and additionally in that each of the two bearing elements (13, 14) has a cylindrical supporting surface (42) which bears against the wall of the housing bore (28).

2. Linear unit according to Claim 1, characterised in that each bearing element (13, 14) has an even bearing surface or a plurality of bearing points, lying in a common bearing plane which forms, with the imaginary axis (45) of the cylindrical supporting surface (42) of the bearing element (13, 14), the same acute delivery angle (a) as the axis of the housing bore (28) forms with the longitudinal axis of the centre sleeve (12), and which bearing plane preferably, in the axial direction of the centre sleeve (12), extends approximately over the entire length of the cylindrical supporting surface (42) of the bearing element (13, 14).

3. Linear unit according to Claim 2, characterised in that each bearing element (13, 14) comprises a guide segment (40a,b) provided with the cylindrical supporting surface (42) and a bearing member (54), which is inserted snugly into a fixture (44, 50, 52) for the guide segment (40a,b) and, preferably, is detachably connected to the latter.

4. Linear unit according to Claim 3, characterised in that two bearing elements (13, 14) are in each case provided, in that the two bearing elements (13, 14), arranged jointly in a housing bore (28), are bounded on the mutually facing longitudinal sides of their guide segments (40a,b) by a shoulder surface (58), which forms at least approximately an angle of 45° with the bearing plane of the bearing member (54).

5. Linear unit according one of the preceding claims, characterised in that local recesses (36, 38, 62, 64, 66) are provided in the supporting surfaces (42) of the bearing elements (13, 14) and, correspondingly, in the wall (34) of the housing bore (28) receiving the bearing elements (13, 14), which recesses serve to form cavities which are open towards the outer face (46) of the bearing element (13, 14) and contain a filling material, introduced following the adjustment of the bearing elements (13, 14), for the positive-locking and play-free securement of the bearing elements (13, 14) between the housing part (10) and the centre sleeve (12).

6. Linear unit according to Claim 5, characterised in that a curable plastic serves as the filling material.

7. Linear unit according to Claim 5 or 6, characterised in that the local recesses (36, 38, 62, 64, 66) in the wall (34) of the housing bore (28) and in the supporting surfaces (42) of the bearing elements (13, 14) are constructed without radial undercuts.

8. Linear unit according one of the preceding claims, having a centre sleeve which has a rectangular or square cross-sectional profile, characterised in that the centre sleeve (12) is guided, on two diametrically opposed longitudinal edges (18, 22), by bearing elements (13, 14) arranged in pairs in cylindrical housing bores (28).


## Revendications

1. Unité linéaire pour appareils de manutention et analogues pour utilisation dans l'industrie manufacturière avec un carter (10) et un fourreau de broche (12) monté de façon à pouvoir coulisser dans un passage de carter (11), manchon qui a au moins une arête longitudinale (18, 22) et est pourvu de surfaces d'appui (24) s'étendant à faible distance à côté de l'arête longitudinale (18, 22), surfaces sur lesquelles reposent des éléments de palier (13, 14), qui sont fixés entre des épaulements d'appui sur le carter (10) et les surfaces d'appui (24) du fourreau de broche (12) sans jeu et de façon impeccable, unité linéaire caractérisée en ce qu'au moins deux éléments de palier (13, 14) prévus dans la même zone axiale de guidage, associés aux deux surfaces d'appui (24) d'une arète longitudinale (18, 22) du fourreau de broche (12) sont disposés ensemble dans un alésage (28), formant carter, cylindrique, recoupant le passage de carter (11) pour le fourreau de broche (12) en long, alésage (28) dont l'axe (30) se trouve au moins approximativement dans un plan contenant l'arète longitudinale (18, 22) correspondante du fourreau de broche (12) et son axe longitudinal (32) et forme un angle aigu de réglage (a) avec l'axe longitudinal (32) et en outre en ce que chacun des deux éléments de palier (13, 14) a une surface d'appui cylindrique (42)reposant sur la paroi de l'alésage (28) formant carter.

2. Unité linéaire selon la revendication 1, caractérisée en ce que chaque élément de palier (13, 14) a une surface plane d'appui ou un certain nombre d'emplacements d'appui, qui se trouvent dans un plan d'appui commun, qui forme avec l'axe imaginaire (45) de la surface d'appui cylindrique (42) de l'élément de palier (13, 14) le même angle aigu de réglage (a), que celui de l'axe de l'alésage (28) formant carter avec l'axe longitudinal du fourreau de broche (12) et ledit plan d'appui s'étendant de préférence en direction de l'axe du fourreau de broche (12) approximativement sur toute la longueur de la surface d'appui cylindrique (42) de l'élément de palier (13, 14).

3. Unité linéaire selon la revendication 2, caractérisée en ce que chaque élément de palier (13, 14) consiste en un segment de guidage (40 a, b) pourvu de la surface d'appui cylindrique (42) et en un corps de palier (54), qui est monté dans un volume de réception (44, 50, 52) du segment de guidage (40a, b) et est fixé à celui-ci de préférence de façon démontable.

4. Unité linéaire selon la revendication 3, caractérisée en ce qu'il est prévu respectivement deux éléments de palier (13, 14), en ce que les deux éléments de palier (13, 14) enfoncés ensemble dans un alésage (28) formant carter sont limités sur leurs côtés longitudinaux tournés l'un vers l'autre de leurs segments de guidage (40a, b) par une surface d'épaulement (58), qui forme au moins approximativement un angle de 45° avec le plan du corps de palier (54).

5. Unité linéaire selon l'une des revendications précédentes, caractérisée en ce qu'il est prévu dans les surfaces d'appui (42) des éléments de palier (13, 14) et correspondant à cela dans la paroi (34) de l'alésage (28) formant carter et recevant les éléments de palier (13, 14) des évidements locaux (36, 38, 62, 64, 66), grâce auxquels sont formés des espaces creux ouverts vers le côté frontal extérieur (46) de l'élément de palier (13, 14), espaces qui contiennent un matériau de remplissage mis après l'ajustage des éléments de palier (13, 14) pour la fixation par interpénétration par la forme et sans jeu des éléments de palier (13, 14) entre le carter (10) et le fourreau de broche (12).

6. Unité linéaire selon la revendication 5, caractérisée en ce que comme matériau de remplissage on utilise une matière plastique durcissable.

7. Unité linéaire selon la revendication 5 ou 6, caractérisée en ce que les évidements locaux (36, 38, 62, 64, 66) dans la paroi (34) de l'alésage (28) formant carter et les surface d'appui (42) des éléments (13, 14) sont réalisés sans contre dépouilles radiales.

8. Unité linéaire selon l'une des revendications précédentes, avec un fourreau de broche, qui a en section transversale un contour rectangulaire ou quadratique, unité linéaire caractérisée en ce que le fourreau de broche (12) est guidé sur deux arètes longitudinales (18, 22) se faisant diamétralement vis-à-vis par des éléments de palier (13, 14) s'enfonçant par paire dans les alésages cylindriques (28) formant carter.

FIG.1

FIG. 2

7

FIG. 3

FIG. 4

FIG. 5